# EUROPÄISCHE PATENTSCHRIFT

(11) **EP 0 342 507 B1**
(45) Veröffentlichungstag und Bekanntmachung des Hinweises auf die Patenterteilung: **29.03.1995**
(21) Anmeldenummer: 89108413.9
(22) Anmeldetag: 10.05.1989
(51) Int. Cl.: H04M 19/00, H04Q 1/20

(54) **Schaltungsanordnung für Stromversorgungseinrichtungen in Fernmeldevermittlungsanlagen, insbesondere Fernsprechvermittlungsanlagen**
Circuit for feeding equipments in telecommunication exchanges, especially in phone exchanges
Circuit pour équipements d'alimentation dans des centraux de télécommunication, spécialement pour des centraux téléphoniques

(30) Priorität: 18.05.1988 DE 3816947
(43) Veröffentlichungstag der Anmeldung: 23.11.1989
(73) Patentinhaber: SIEMENS AKTIENGESELLSCHAFT, 80333 München (DE)
(72) Erfinder: Birlmeier, Josef, D-8024 Deisenhofen (DE)

(56) Entgegenhaltungen:
- DE-A- 3 209 967
- PATENT ABSTRACTS OF JAPAN vol. 5, no. 23 (E-45)(695) 12. Februar 1981 & JP-A-55 149 556 (NIPPON DENKI K.K.)
- COMMUTATION & ELECTRONIQUE Bd. 1, Nr.56, 1977, Seiten 61 - 76; PENHOUET R.: 'L' énergie dans les centraux de commutation électronique du type temporel'

## Beschreibung

Die Erfindung bezieht sich auf eine Schaltungsanordnung für Stromversorgungseinrichtungen in Fernmeldevermittlungsanlagen, insbesondere Fernsprechvermittlungsanlagen, mit mit Spannungen zu versorgenden Geräten und mit Spannungsquellen für wenigstens eine Betriebsspannung und für eine Zusatzspannung, welch letztere nur für einen Teil der Geräte erforderlich und über eine der Zusatzspannungsquelle zugeordnete lösbare Verbindung, insbesondere Steckvorrichtung, zuführbar ist, und mit einer den Geräten oder Gruppen von ihnen individuellen Spannungsüberwachungseinrichtung.

Die Erfindung geht also von einer als bekannt vorausgesetzten Schaltungsanordnung aus, bei der von einer Gesamtheit von vorhandenen Geräten - oder Gruppen von ihnen - nur ein Teil außer mit einer Betriebsspannung (oder mit mehreren Betriebsspannungen) zusätzlich mit einer Zusatzspannung versorgt werden muß. Das Erfordernis der Zusatzspannung besteht also nur für einen Teil der Geräte oder nur für einen Teil von Gruppen von ihnen. In den Geräten oder gemeinsam jeweils für eine Gruppe derselben ist je eine Spannungsüberwachungseinrichtung vorgesehen. Diese hat zu überwachen, ob die jeweils erforderlichen Spannungen, d.h. Betriebsspannung(en) und gegebenenfalls zusätzlich die Zusatzspannung, vorhanden ist bzw. sind. Bei Spannungsausfall oder bei Unterschreitung oder Überschreitung bestimmter Toleranzgrenzen erfolgt eine Alarmsignalgabe in allgemein bekannter Weise, wofür es verschiedene Möglichkeiten gibt.

Für die Erfindung besteht das Problem, daß nur bei einem Teil der Geräte - bzw. Gerätegruppen - die Zusatzspannung überhaupt erforderlich ist. Fällt die Zusatzspannung störungsbedingt aus, so soll die Alarmsignalgabe nur stattfinden, wenn bei den betreffenden Geräten - bzw. Gerätegruppen - auch tatsächlich das Erfordernis für die Zusatzspannung vorliegt. Durch eine Anordnung gemäß der deutschen Offenlegungsschrift 3 209 967 (VPA 82 P 1189 DE) führt eine Alarmsignalgabe zur sofortigen Außerbetriebsetzung der betreffenden Geräte; dies kann auch zur Folge haben, daß - sofern es sich bei diesen Geräten um verbindungsindividuelle Schalteinrichtungen handelt - auch entsprechende Verbindungen unterbrochen oder ausgelöst werden. Hierzu ist gemäß der genannten Offenlegungsschrift ein Alarmsignalstromkreis vorgesehen, bei dessen Unterbrechung die Alarmsignalgabe eintritt. Dieser Alarmsignalstromkreis kann in Reihe über mehrere Einrichtungen geführt werden; tritt in einer dieser Einrichtungen eine Störung ein, die zu einer Alarmsignalgabe führen muß, so wird in der betreffenden Einrichtung der Alarmsignalstromkreis unterbrochen. Es ist vorgeschlagen worden, das Vorliegen oder Nichtvorliegen der Zusatzspannung durch entsprechende Verdrahtungsmaßnahmen bezüglich dieses Signalstromkreises zu berücksichtigen.

Für die Erfindung besteht die Aufgabe, in einer Schaltungsanordnung der eingangs angegebenen Art eine Berücksichtigung des gegebenen oder auch nicht gegebenen Erfordernisses des Vorhandenseins der Zusatzspannung von entsprechenden Verdrahtungsmaßnahmen unabhängig zu machen. Die Alarmsignalgabe soll also in Abhängigkeit vom jeweils Vorliegen des Erfordernisses für die Zusatzspannung abhängig sein; dieses Erfordernis soll der jeweiligen Spannungsüberwachungseinrichtung auf andere Weise eingegeben werden als mit Hilfe von handwerklich auszuführenden Verdrahtungsmaßnahmen.

Die Erfindung löst die ihr gestellte Aufgabe dadurch, daß die Spannungsüberwachungseinrichtung außer einem Überwachungsorgan ein Speicherorgan enthält, und daß das Überwachungsorgan durch die von der Zusatzspannungsquelle über die lösbare Verbindung, insbesondere die Steckvorrichtung, gelieferte Zusatzspannung aktiviert wird und das Speicherorgan mittels der von der Betriebsspannungsquelle unabhängig von der lösbaren Verbindung, insbesondere der Steckvorrichtung, gelieferten Betriebsspannung einerseits über einen vom aktivierten Überwachungsorgan betätigten Schalter wirksam geschaltet wird und andererseits sich über einen eigenen Schalter im wirksam geschalteten Zustand erhält, und daß im wirksam geschalteten Zustand des Speicherorgans bei zugleich nichtaktiviertem Schaltzustand des Überwachungsorgans diese beiden Organe ein Alarmsignal abgeben, welches für die Zusatzspannung erfordernde Geräte oder deren betreffende Gruppen ein Fehlen dieser Zusatzspannung anzeigt oder ein Über- und/oder Unterschreiten vorgegebener Toleranzgrenzen.

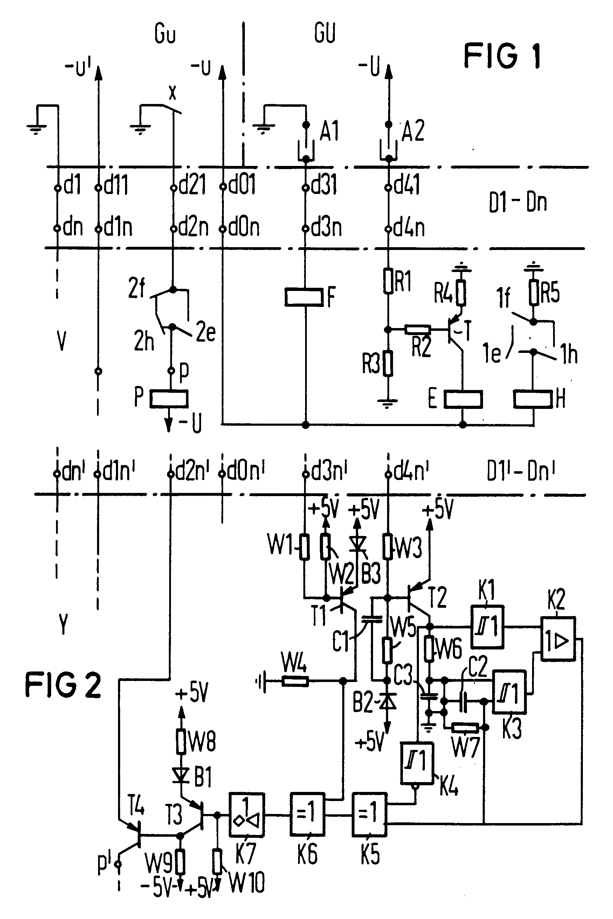

Ausführungsbeispiele der Erfindung sind in den Figuren 1 und 2 der Zeichnung dargestellt, und zwar nur in ihren wesentlich zum Verständnis der Erfindung beitragenden Bestandteilen; hierauf ist die Erfindung jedoch nicht beschränkt.

In Figur 1 ist links oben eine Betriebsspannungsquelle Gu angedeutet. Diese liefert eine Mehrzahl von Betriebsspannungen (- u, -u′), die in Relation zu Massepotential bestehen. Außerdem ist eine Zusatzspannungsquelle GU vorgesehen, die eine Zusatzspannung -U liefert; diese beteht ebenfalls in Relation zu Massepotential.

Es ist eine Anzahl von Geräten D1 bis Dn vorgesehen. Hierbei möge es sich um eine Gruppe von mit Spannungen zu versorgenden Geräten handeln. Bei der in den Figuren dargestellten Schaltungsanordnung handelt es sich um Stromversorgungseinrichtungen in Fernmeldevermittlungsanlagen, insbesondere Fernsprechvermittlungsanlagen. Die erwähnten Spannungsquellen dienen also zur Lieferung wenigstens einer Betriebsspannung (Gu) und einer Zusatzspannung (GU).

Es ist eine größere Anzahl von mit Spannungen zu versorgenden Geräten vorgesehen. Diese Geräte mögen in Gruppen zusammengefaßt sein. Geräte oder Gruppen von ihnen sind sämtlich mit den genannten Betriebsspannungen zu versorgen; jedoch nur ein Teil der Geräte oder ein Teil von Gruppen von Geraten ist zusätzlich mit der genannten Zusatzspannung (-U) zu versorgen. In Figur 1 der Zeichnung ist eine Gruppe von Geräten Dl bis Dn angedeutet. Jedes Gerät trägt Anschlußpunkte für die Zuführung der Versorgungsspannungen. Diese Anschlußpunkte sind pro Gerät, z.B. D1, sinngemäß bezeichnet, z.B. die Anschlußpunkte d1 bis d41. Die Gruppenzugehörigkeit einer Gruppe von Geräten möge im vorliegenden Falle darin bestehen, daß die Geräte, die jeweils zu einer Gruppe gehören, von einer Betriebsspannungsquelle und einer Zusatzspannungsquelle her versorgt werden.

Die über die Anschlußpunkte d1 bis d41 und dn bis d4n führenden Spannungs-Zuführungsleitungen führen letztendlich zu einer Spannungsüberwachungseinrichtung V. Diese ist einer Gruppe von Geräten individuell zugeordnet, oder auch einem einzelnen Gerät, sofern ein einzelnes Gerät von einer eigenen Betriebsspannungsquelle und gegebenenfalls von einer eigenen Zusatzspannungsquelle her versorgt wird.

Wie bereits ausgeführt wurde, werden sämtliche Geräte, d.h. sämtliche Gruppen von Geräten, mit den erforderlichen Betriebsspannungen versorgt. Die Versorgung einer Zusatzspannung ist nur fakultativ; sie ist nur für einen Teil des Gerätes bzw. Gerätegruppen erforderlich. Die Zuführung der Zusatzspannung erfolgt deshalb über eine lösbare Verbindung, die insbesondere als Steckverbindung A1/A2 ausgebildet ist. Statt einer Steckverbindung oder Steckvorrichtung kann auch eine schraubbare Verbindung oder Klemmverbindung mit Federkraft oder jede andere lösbare Verbindung verwendet werden. - Praktisch bedeutet dies, daß Geräte bzw. Gerätegruppen bei ihrer Montage generell mit einer Betriebsspannungsquelle bzw. mit den betreffenden Betriebsspannungsquellen verbunden werden, daß aber eine Verbindung mit einer Zusatzspannungsquelle nur vorgenommen wird, soweit dies notwendig ist. Die Verbindung mit den Betriebsspannungsquellen kann ebenfalls über eine Steckvorrichtung vorgenommen werden.

Im unteren Teil der Schaltungsanordnung in Figur 1 ist eine Spannungsüberwachungseinrichtung V auszugsweise dargestellt. Die Spannungsüberwachungseinrichtung V hat nun die Aufgabe, das Vorhandensein der Betriebsspannung bzw. der Betriebsspannungen zu überwachen und zusätzlich ein Vorhandensein der Zusatzspannung, sofern diese für das betreffende Gerät bzw. die betreffende Gruppe von Geräten tatsächlich erforderlich ist. Die praktische Realisierung der Überwachung von Betriebsspannungen erfolgt auf an sich bekannte Weise, vorzugsweise so, wie es in der bereits oben genannten deutschen Patentschrift 3 209 967 beschrieben ist. Ein Ausfall der Betriebsspannungen in der Betriebsspannungsquelle Gu führt dazu, daß der Kontakt x geöffnet wird. Dies geschieht bei einem Ausfall einer oder mehrerer Betriebsspannungen sowie auch dann, wenn diese Betriebsspannungen vorgegebene Toleranzgrenzen unterschreiten und/oder überschreiten. Der über den Kontakt x verlaufende Alarmsignalstromkreis führt zu einem Relais P. Dieses ist im Normalzustand, das heißt im Schaltzustand der störungsfreien Betriebsbereitschaft, angesprochen, d.h. seine hier nicht dargestellten Kontakte sind betätigt. In der Alarmsituation wird das Relais P stromlos und seine Kontakte kehren in die Ruhelage zurück und geben damit ein Alarmsignal in an sich bekannter und deshalb hier nicht im einzelnen dargestellter und beschriebener Weise ab.

Wie bereits mehrfach angegeben wurde, werden sämtliche Geräte, d.h. sämtliche Gruppen von Geräten mit den erforderlichen Betriebsspannungen versorgt. Jedoch werden nur diejenigen Gruppen von Geräten, die die Zusatzspannung tatsächlich brauchen, auch mit dieser Zusatzspannung versorgt. Praktisch bedeutet dies, daß eine Zusatzspannungsquelle GU an die betreffende Gerätegruppe mittels der Steckvorrichtung A1/A2 nur angeschaltet wird, wenn das Bedürfnis für die betreffende Gerätegruppe besteht, dieselbe mit der Zusatzspannung zu versorgen.

Die Überwachungseinrichtung V überwacht bei sämtlichen Gerätegruppen das Vorhandensein der Betriebsspannungen in der oben erläuterten Weise. Ein Vorhandensein der Zusatzspannung jedoch wird nur überwacht, wenn der Bedarf hierfür bei einer Gerätegruppe tatsächlich vorliegt. Liegt ein solcher Bedarf tatsächlich vor, so wird das Vorhandensein der Zusatzspannung mitüberwacht. Bei einem Ausfall der Zusatzspannung wird unter der Voraussetzung des Bedarfes für diese Zusatzspannung das Alarmsignal gebildet und abgegeben. Liegt ein solcher Bedarf jedoch nicht vor, so unterbleibt die Bildung und Abgabe des betreffenden Alarmsignales im Hinblick auf die Überwachung der Zusatzspannung.

Die Kennzeichnung einer Gerätegruppe hinsichtlich dessen, daß sie die Zusatzspannung braucht oder nicht braucht, erfolgt nicht mit Hilfe einer entsprechenden Lötverdrahtung oder mit einer entsprechenden Steckerverbindung, z.B. mit Hilfe eines sonst üblichen Kurzschlußsteckers sondern in erfindungsgemäßer Weise mit Hilfe eines Speicherorgans. Die Spannungsüberwachungseinrichtung V enthält als Speicherorgan ein Relais H zusätzlich zu einem Überwachungsorgan, das mit Hilfe des Relais E und des vorgeschalteten Transistors T realisiert ist. Die Funktionsweise und Bedeutung des Relais F sei vorerst einmal außer Betracht gelassen. - Wird nun eine Gerätegruppe eingeschaltet, so werden hier zunächst einmal die erforderlichen Betriebsspannungen von der Betriebsspannungsquelle Gu zugeführt. Ist nun zusätzlich die Zusatzspannung für eine Gerätegruppe erforderlich, so wird die Zusatzspannungsquelle GU über die Steckvorrichtung A1/A2 mit den über die Schaltpunkte d31, d41, d3n und d4n verlaufenden Stromzuführungsleitungen verbunden, die schließlich in der Spannungsüberwachungseinrichtung V münden. Es fließt nun dadurch über die Widerstände R1 und R3 ein gewisser Strom, der einen Spannungsabfall u.a. am Widerstand R1 hervorruft. Dieser Spannungsabfall kommt am Transistor T (Emitter-Basis-Strecke) zur Wirkung, wodurch derselbe stromführend wird über seine Emitter-Kollektor-Strecke. Das Relais E wird dadurch erregt. Es spricht an und schließt den Kontakt 1e. Es sei nun zu zunächst angenommen, daß das Relais F nicht vorhanden sei, und daß sein Arbeitskontakt 1f überbrückt sei. Wenn nun der Kontakt 1e des Relais betätigt wird, wird das Relais H erregt durch einen Strom, der über den Widerstand R5 zugeführt wird. Das Relais H spricht an und schließt u.a. seinen Kontakt 1h und bildet damit einen Haltestromkreis, der vom Kontakt 1e des Relais E unabhängig ist. Das Relais H bleibt gehalten bis einmal sämtliche Betriebsspannungen wieder abgeschaltet werden. - Dadurch, daß das Relais H in der Spannungsüberwachungseinrichtung V angesprochen ist, ist für die betreffende Gruppe von Geräten D1 bis Dn ein Kriterium dafür gespeichert, daß diese Gruppe von Geräten die Zusatzspannung braucht. Die Kennzeichnung einer Gerätegruppe dahingehend, daß für die betreffende Gerätegruppe die Zusatzspannung erforderlich ist, besteht also darin, daß bei der Einschaltung wenigstens einmal die Zusatzspannung -U über die Steckvorrichtung A2 zugeführt worden ist. Damit ist die betreffende Gruppe von Geräten gekennzeichnet als eine solche, bei der der Bedarf für die Zusatzspannung vorliegt. Diese Kennzeichnung kann erst dadurch wieder gelöscht werden, daß die Betriebsspannungen für die betreffende Gruppe von Geräten wieder ausgeschaltet wird und daß das Relais H dadurch wieder zum Abfallen gebracht wird.

Sprechen nun in der zuvor beschriebenen Weise nacheinander bei der Einschaltung einer Gruppe von Geräten die Relais E und H in der dieser Gruppe zugeordneten Spannungsüberwachungseinrichtung an, so wird beim Ansprechen des Relais E zunächst dessen Kontakt 2e geschlossen. Zunächst sei angenommen, daß das Relais F nicht existiere, und daß dessen Kontakt 2f überbrückt sei. Beim Ansprechen des Relais H wird dessen Ruhekontakt 2h geöffnet. Damit ist der Signalalarmstromkreis "scharf" gemacht. Fällt nun die Zusatzspannung -U aus, so wird der Transistor T wieder stromlos und das Relais E ebenfalls. Es kehrt in seine Ruhelage zurück und öffnet u.a. auch seinen Kontakt 2e und bringt damit das Relais P zum Abfallen. Hierdurch wird die weiter oben beschriebene Alarmsignalgabe herbeigeführt. Die Zusammenschaltung des Transistors T mit den Widerständen R1 bis R4 kann in an sich bekannter Weise auch so gestaltet werden, daß damit eine Überwachung der Zusatzspannung auf ein Unterschreiten und/oder Überschreiten bestimmter Toleranzgrenzen bezüglich der Zusatzspannung -U möglich ist.

Das als Relais E ausgebildete Überwachungsorgan wird also durch die von der Zusatzspannungsquelle GU über die lösbare Verbindung A2 (Steckvorrichtung) gelieferte Zusatzspannung -U aktiviert, wobei der Transistor T in der beschriebenen Weise in die schaltungstechnischen Zusammenhänge miteinbezogen ist. Das als Relais H ausgebildete Speicherorgan wird mittels der von der Betriebsspannungsquelle Gu unabhängig von der lösbaren Verbindung A2 (Steckvorrichtung) gelieferten Betriebsspannung -u einerseits über den vom aktivierten Überwachungsorgan (Relais E) betätigten Schalter (Kontakt 1e) wirksam geschaltet; andererseits wird das als Relais H ausgebildete Speicherorgan über den als relaiseigenen Kontakt 1h ausgebildeten Schalter im wirksam geschalteten Zustand erhalten. Im wirksam geschalteten Zustand des Speicherorgans (Relais H) bei zugleich nicht aktiviertem Schaltzustand des Überwachungsorgans (Relais E) geben diese beiden Organe ein Alarmsignal (Unterbrechung des zum Relais P verlaufenden Stromkreises) ab (Zusammenspiel der Kontakte 2e und 2h), welche für die die Zusatzspannung erfordernde Gruppe von Geräten D1 bis Dn ein Fehlen dieser Zusatzspannung anzeigt bzw. ein Über- und/oder Unterschreiten vorgegebener Toleranzgrenzen.

Die Beschreibung kommt nun auf ein als Hilfsrelais F ausgebildetes Hilfsorgan zu sprechen. Dieses Hilfsrelais F ist einerseits mit einem ersten Wicklungsende unabhängig von der Steckvorrichtung A1/A2 mit der Betriebsspannungsquelle Gu verbunden (Betriebsspannung -u). Andererseits ist das Hilfsrelais mit einem zweiten Wicklungsende ebenfalls über die genannte lösbare Verbindung, und zwar die Steckvorrichtung A1 mit einem dem Gegenpol der Betriebsspannungsquelle bildenden Anschluß derselben, und zwar einen Massepotential führenden Punkt verbindbar. Das Hilfsrelais F wird über die Betriebsspannungsquelle Gu mit Betriebsspannung (-u) versorgt, wenn die Steckvorrichtung A1, die baulich mit der Steckvorrichtung A2 vereinigt sein möge, zusammengeführt ist. Die Wirksamschaltung des Speicherrelais H ist bei Vorhandensein des Hilfsrelais F über den Kontakt 1e des Überwachungsrelais E in Abhängigkeit gebracht von der Einschaltung des Hilfsrelais F und der Betätigung seines Kontaktes 1f. Die Abgabe des Alarmsignales im nichtaktivierten Schaltzustand des Überwachungsrelais E und im nicht wirksam geschalteten Zustand des Speicherrelais H erfolgt bei Vorhandensein des Relais F zusätzlich auch dann, wenn das Hilfsrelais F eingeschaltet und betätigt ist. Dies hat folgende Bedeutung und Wirkung: Wird die Zusatzspannungsquelle GU über die Steckvorrichtung A1/A2 mit der betreffenden Gruppe von Geräten D1 bis Dn verbunden und liefert in dieser Situation die Zusatzspannungsquelle GU nicht oder noch nicht die Zusatzspannung -U, so nimmt bereits das Hilfsrelais F das Kriterium auf, daß die Zusatzspannung für die betreffende Gruppe von Geräten erforderlich ist. Kommt also die Absicht, die Zusatzspannungsquelle GU an die betreffende Gruppe von Geräten anzuschalten, über die Steckvorrichtung A1/A2, zum Ausdruck, so wird dies in der Überwachungseinrichtung auch dann registriert, wenn die Zusatzspannungsquelle GU ihre Zusatzspannung -U nicht oder noch nicht liefert. In diesem Falle wird am Kontakt 2f der über den Kontakt x und das Relais P verlaufende Stromkreis unterbrochen, und es erfolgt in der beschriebenen Weise die Alarmsignalgabe. Kommt dann in der beschriebenen Weise das Relais E über den Transistor T zum Ansprechen, so wird die zuletzt beschriebene Alarmsignalgabe durch Schließung des Kontaktes 2e sofort wieder beendet. Es ist möglich, das Relais F in an sich bekannter Weise mit eine Ansprechverzögerung auszustatten. Diese hätte dann zur Folge, daß das Relais E beim Zusammenführen der Steckvorrichtung A1/A2 schneller anspricht als das Relais F. Dadurch wäre dann die kurzzeitige Alarmsignalgabe bei der Anschaltung der Zusatzspannungsquelle GU mittels Zusammenführung der Steckvorrichtung A1/A2 unterbunden. Nur dann, wenn bei der Zusammenführung der Steckvorrichtung A1/A2 das Relais F anspricht (ansprechverzögert), nicht aber das Relais E, würde dann die Alarmsignalgabe stattfinden. - Wie in Figur 1 dargestellt ist, ist der Ruhekontakt 2f des Hilfsrelais F mit dem Speicherrelais-Ruhekontakt 2h in Reihe geschaltet.

In Figur 2 ist eine elektronisch arbeitende Alternativlösung zu der in Figur 1 dargestellten und in Zusammenhang damit beschriebenen Spannungsüberwachungseinrichtung dargestellt. Die Schaltpunkte dn′ bis d4n′ in Figur 2 entsprechen den Schaltpunkten dn bis d4n in Figur 1. Die Gruppe von Geräten D1′ bis Dn′ in Figur 2 entspricht der Gruppe von Geräten d1 bis dn in Figur 1. Der Schaltpunkt p′ in Figur 2 entspricht dem Schaltpunkt p in Figur 1. Über diesen Schaltpunkt wird das Relais P in Figur 1 zur Alarmsignalgabe zum Abfallen gebracht, welches in der normalen, also nicht der Alarmsituation entsprechenden Betriebssituation erregt ist. Zur Alarmsignalgabe wird das Relais P zum Abfallen gebracht. - Entsprechendes gilt für die Anordnung gemäß Figur 2.

Über die Schaltpunkt dn′, d1, n′ und d0n′ werden ebenso wie in Figur 1 Betriebsspannungen zugeführt. Im Falle von Figur 2 möge es sich um die Betriebsspannungen von -5 Volt, (anliegend am Widerstand W9) und +5 Volt (anliegend an den Transistoren T1 und T2, am Widerstand W2 und an der Diode B2) handeln. Diese Spannungen bestehen in bekannter Weise gegenüber Massepotential.

Wird eine Gerätegruppe eingeschaltet, z.B. D1′ bis Dn′ so bedeutet dies eine Anschaltung der genannten Betriebsspannungspotentiale von -5 Volt und von +5 Volt. Nach Einschaltung der Betriebsspannungen befinden sich die Transistoren T1 und T2 im Sperrzustand. Das Potential von +5 Volt liegt bei beiden Transistoren jeweils an ihrem Emitter und Kollektor.

Wird nun die Zusatzspannungsquelle GU (vergleiche Figur 1) über eine Steckvorrichtung ähnlich wie A1/A2 in Figur 1 über die Schaltpunkte d3n′ und D4n′ an die Spannungsüberwachungseinrichtung Y gemäß Figur 2 angeschlossen, so werden die beiden Transistoren T1 und T2 leitend über ihre Emitter-Kollektor-Strecke, weil bei beiden Transistoren an der Basis jeweils ein Potential erscheint, das negativer ist als +5 Volt.

Es sind auch noch 3 Schmitt-Trigger K1, K3 und K4 vorgesehen. Ferner ist ein Leistungsgatter K2 vorgesehen. Bei den Gatterschaltungen K5 und K6 handelt es sich um Exclusiv-Oder-Gatter. Ferner ist ein Oder-Gatter K7 mit offenem Kollektor ("open collector"), vorgesehen. - Wenn der Transistor T3 über seine Emitter-Kollektor-Strecke stromlos ist, fließt über die Emitter-Basis-Strecke des Transistors T4 ein Emitter-Basis-Strom, wodurch dieser Transistor über seine Emitter-Kollektor-Strecke stromdurchlässig ist. Dies ist der Fall, wenn der Alarmzustand nicht vorliegt. In dieser Situation ist in der Schaltungsanordnung gemäß Figur 1 das Relais P angesprochen; es fällt ab, wenn die Alarmsituation eintritt. Entsprechendes gilt für die Anordnung gemäß Figur 2. - Wenn der Transistor T3 über seine Emitter-Kollektor-Strecke stromlos ist, ist also der Transistor T4 über seine Emitter-Kollektor-Strecke stromführend. Wird der Transistor T3 über seine Emitter-Kollektor-Strecke stromführend, so wird der Transistor T4 gesperrt, weil dann das Potential an seiner Basis positiver ist als das seinem Emitter zugeführte Potential (Massepotential).

Erscheint am Schaltpunkt d3n′ Massepotential, so wird der Transistor T1 - wie oben angegeben - über seine Emitter-Kollektor-Strecke stromführend. Am oberen Eingang des Oder-Gatters K6 erscheint +5-Volt-Potential. Dieses Kriterium gelangt über die Gatter K6 und K7 zur Basis des Transistors T3. Dieser wird dadurch leitend und der Transistor T4 wird infolgedessen nichtleitend (jeweils Emitter-Kollektor-Strecke).

Erscheint am Schaltpunkt d4n′ das Potential von -93 Volt, so wird der Transistor T2 infolgedessen leitend über seine Emitter-Kollektor-Strecke. Die Reaktion des Transistors T2 ist zeitlich etwas verzögert; hierzu ist der Kondensator C1 vorgesehen. Das Leitendwerden des Transistors T2 (Emitter-Kollektor-Strecke) gelangt als Kriterium über den Schmitt-Trigger K1 zum Leistungsgatter K2. Dieses gibt ein Ausgangssignal ab, das zum Schmitt-Trigger K3 und zum Exclusiv-Oder-Gatter K5 gelangt. Der Schmitt-Trigger-K3 gibt dieses Kriterium wiederum weiter zum Leistungsgatter K2 und bewirkt, daß dieses in dem eingenommenen Schaltzustand verbleibt. Dies entspricht der Selbsthalte-Funktion des Relais H über seinen Kontakt 1h in Figur 1. Das über den Kollektor des Transistors T2 in dessen leitendem Zustand (Emitter-Kollektor-Strecke) abgegebene Signal gelangt außerdem auch zum Schmitt-Trigger K4. Dieser weist einen negierenden Ausgang auf. An den Eingängen des Exclusiv-Oder-Gatters K5 liegt nun ein Eingangssignal an, und zwar an seinem unteren Eingang. Wird nun die über den Schaltpunkt d4n′ zugeführte Spannung abgeschaltet (bzw. über- und/oder unterschreitet sie bestimmte Toleranzgrenzen), so wird der Transistor T2 in an sich bekannter Weise nichtleitend über seine Emitter-Kollektor-Strecke. Der Schaltzustand des Leistungsgatters K2 wird hiervon nicht verändert aufgrund der mit Hilfe des Schmitt-Triggers K3 realisierten Selbsthalte-Funktion. Am unteren Eingang des Exclusiv-Oder-Gatters K5 liegt also nach wie vor ein Signal an. Da jedoch der Transistor T2 über seine Emitter-Kollektor-Strecke nicht leitend wird, verschwindet das Signal am Eingang des Schmitt-Triggers K4, wodurch nunmehr an dessen negierendem Ausgang ein Signal erscheint. Nunmehr liegt an beiden Eingängen des Exclusiv-Oder-Gatters K5 je ein Eingangssignal.

Wie weiter oben ausgeführt wurde, gelangt bei Anschaltung des Erdpotentials über den Schaltpunkt d3n′ ein Ausgangssignal vom Transistor T1 zum Exclusiv-Oder-Gatter K6. Infolgedessen gibt es ein Ausgangssignal, das über das Oder-Gatter K7 bewirkt, daß der Transistor T3 leitend und der Transistor T4 nichtleitend wird. (Emitter-Kollektor-Strecke). Erscheint dann aber am unteren Eingang des Exclusiv-Oder-Gatters K5 das Eingangssignal (siehe oben), und zwar alleine an diesem Eingang, so gibt dieses Gatter ein Ausgangssignal ab. Infolgedessen liegen dann an den beiden Eingängen des Exclusiv-Oder-Gatters K6 Eingangssignale an, wodurch am Ausgang dieses Gatters das Signal wieder verschwindet. Über das Oder-Gatter K7 wird nun der Transistor T3 wieder in seinen Sperrzustand gebracht und der Transistor T4 wird erneut leitend und beendet damit den Alarmsignalgabe-Zustand, der zunächst durch Erdpotential alleine über den Schaltpunkt d3n′ eingeleitet wurde (Eingangssignal alleine am oberen Eingang des Exclusiv-Oder-Gatters K6).

Sinkt nun über die dem Schaltpunkt d4n′ zugeführte Minusspannung (-U, vergleiche Figur 1) ab, oder wird sie überhaupt ausgeschaltet, so wird der Transistor T2 - wie bereits erläutert - wieder stromlos (Emitter-Kollektor-Strecke). Das betreffende Signal am Eingang des Schmitt-Triggers K4 verschwindet und stattdessen erscheint ein Signal an seinem negierenden Ausgang. Das Exclusiv-Oder-Gatter K5, das nun an beiden Eingängen je ein Eingangssignal erhält, nimmt infolgedessen das bis dahin an seinem Ausgang liegende Ausgangssignal weg. Infolgedessen liegt am unteren Eingang des Exclusiv-Oder-Gatters K6 kein Eingangssignal mehr an, sondern lediglich an seinem oberen Eingang, woraufhin an seinem Ausgang wieder ein Signal erscheint, das über das Oder-Gatter K7 wieder dazu führt, daß der Transistor T3 leitend und infolgedessen der Transistor T4 nichtleitend wird (jeweils Emitter-Kollektor-Strecke).

Erscheint also alleine über den Schaltpunkt d3n′ Erdpotential, so erfolgt Signalgabe. Erscheint am Schaltpunkt d4n′ Minus-potential (- U, vergleiche Figur 1), so wird sofort oder sehr bald danach der Transistor T4 in der beschriebenen Weise wieder leitend. Sinkt dann das Potential am Schaltpunkt d4n′ wieder ab oder verschwindet es gänzlich, so wird der Transistor T4 wieder nichtleitend hinsichtlich seiner Emitter-Kollektor-Strecke und die Signalgabe beginnt von neuem. - Hinsichtlich der logischen Zusammenhänge und der Auswirkung auf das Alarmsignalgaberelais P (vergleiche Figur 1) ist die Wirkungsweise der Schaltungsanordnung gemäß Figur 2 derjenigen gemäß Figur 1 ganz oder wenigstens weitgehend gleich.

## Patentansprüche

1. Schaltungsanordnung für Stromversorgungseinrichtungen in Fernmeldevermittlungsanlagen, insbesondere Fernsprechvermittlungsanlagen, mit mit Spannungen zu versorgenden Geräten (D1 bis Dn) und mit Spannungsquellen (Gu, GU) für wenigstens eine Betriebsspannung (-u, -u′) und für eine Zusatzspannung (U), wobei letztere nur für einen Teil der Geräte erforderlich und über eine der Zusatzspannungsquelle zugeordnete lösbare Verbindung, insbesondere über die Steckvorrichtung (A1/A2), zuführbar ist, und mit einer den Geräten oder Gruppen von ihnen individuellen Spannungsüberwachungseinrichtung (V),
**dadurch gekennzeichnet,**
daß die Spannungsüberwachungseinrichtung (V) außer einem Überwachungsorgan (E) ein Speicherorgan (H) enthält, und daß das Überwachungsorgan (E) durch die von der Zusatzspannungsquelle über die lösbare Verbindung, insbesondere über die Steckvorrichtung (A1/A2), gelieferte Zusatzspannung aktiviert wird und das Speicherorgan (H) mittels der von der Betriebsspannungsquelle unabhängig von der lösbaren Verbindung, insbesondere der Steckvorrichtung gelieferten Betriebsspannung einerseits über einen vom aktivierten Überwachungsorgan betätigten Schalter (1e) wirksam geschaltet wird und andererseits sich über einen eigenen Schalter (1h) im wirksam geschalteten Zustand erhält, und daß im wirksam geschalteten Zustand des Speicherorgans bei zugleich nichtaktiviertem Schaltzustand des Überwachungsorgans diese beiden Organe ein Alarmsignal abgeben, welches für die Zusatzspannung er fordernde Geräte oder deren betreffende Gruppen ein Fehlen dieser Zusatzspannung anzeigt, oder ein Über- und/oder Unterschreiten vorgegebener Toleranzgrenzen.

2. Schaltungsanordnung nach Anspruch 1,
**dadurch gekennzeichnet**,
daß das Überwachungsorgan (E) und das Speicherorgan (H) als Relais ausgebildet sind, und daß eine Wicklung des als Überwachungsrelais ausgebildeten Überwachungsorgans insbesondere über eine Transistor-Verstärkungs-Stufe (T) mittels der lösbaren Verbindung, insbesondere der Steckvorrichtung (A1/A2), mit der Zusatzspannung (GU) verbunden ist und daß eine Wicklung des als Speicherrelais (H) ausgebildeten Speicherorgans über eine Parallelschaltung eines Überwachungsrelais-Arbeitskontaktes (1e) und eines Speicherrelais-Arbeitskontaktes (1h) mit der Betriebsspannungsquelle verbindbar ist.

3. Schaltungsanordnung nach Anspruch 2,
**dadurch gekennzeichnet**,
daß das Alarmsignal über eine Parallelschaltung eines Überwachungsrelais-Arbeitskontaktes (2e) mit einem Speicherrelais-Ruhekontakt (2h) gebildet wird und in einer Unterbrechung des Alarmsignalstromkreises besteht.

4. Schaltungsanordnung nach Anspruch 1 oder nach Anspruch 3,
**dadurch gekennzeichnet**,
daß ein Hilfsorgan, welches insbesondere als Hilfsrelais (F) ausgebildet ist, einerseits, insbesondere mit einem ersten Wicklungsende, unabhängig von lösbaren Verbindung, insbesondere der der Steckvorrichtung (A1/A2), mit der Betriebsspannungsquelle (Gu) verbunden ist und andererseits, insbesondere mit einem zweiten Wicklungsende, über die lösbare Verbindung, insbesondere die Steckvorrichtung (A1/A2) mit einem dem Gegenpol der Betriebsspannungsquelle bildenden Anschluß derselben verbindbar ist, und daß das Hilfsorgan über die Betriebsspannungsquelle eingeschaltet wird, wenn die Steckvorrichtung zusammengeführt ist, und daß die Wirksamschaltung des Speicherorgans (H) in Schalterabhängigkeit von der Einschaltung und Betätigung des Hilfsorgans (F) steht und daß die Abgabe des Alarmsignales im nichtaktivierten Schaltzustand des Überwachungsorgans und im nicht wirksam geschalteten Zustand des Speicherorgans zusätzlich dann erfolgt, wenn das Hilfsorgan eingeschaltet und betätigt ist.

5. Schaltungsanordnung nach den Ansprüchen 3 und 4, **dadurch** **gekennzeichnet**, daß von dem als Hilfsrelais (F) ausgebildeten Hilfsorgan ein Ruhekontakt (2f) mit dem Speicherrelais-Ruhekontakt (2h) in Reihe geschaltet ist.

6. Schaltungsanordnung nach Anspruch 2 oder 4,
**dadurch gekennzeichnet**,
daß die Relais analog mit Hilfe von Schmitt-Triggern (K1,K3,K4) und Gatterschaltungen (K2, K5 bis K7) realisiert sind.

## Claims

1. Circuit arrangement for power supply facilities in telecommunication exchanges, preferably telephone exchanges, having equipment (D1 to Dn) to be supplied with voltages and having voltage sources (Gu, GU) for at least one operating voltage (-u, -u′) and for an additional voltage (U), the latter being required only for some of the equipment and being feedable via a detachable connection assigned to the additional voltage source, preferably via the plug-in connection (A1/A2), and having a voltage monitoring device (V) individual to the equipment or groups thereof, characterized in that the voltage monitoring device (V) includes not only a monotoring member (E) but also a storing member (H), and in that the monitoring member (E) is activated by the additional voltage supplied by the additional voltage source via the detachable connection, preferably via the plug-in connection (A1/A2), and, by means of the operating voltage supplied by the operating voltage source independently of the detachable connection, preferably the plug-in connection, the storing member (H) is on the one hand switched to operative mode via a switch (1e) actuated by the activated monitoring member and on the other hand keeps itself in the operatively switched state via its own switch (1h), and in that, in the operatively switched state of the storing member with at the same time the non-activated switching state of the monitoring member, these two members emit an alarm signal which indicates an absence of this additional voltage for the equipment requiring the additional voltage or the relevant groups of the said equipment, or indicates an overshooting and/or undershooting of prescribed tolerance limits.

2. Circuit arrangement according to Claim 1, characterized in that the monitoring member (E) and the storing member (H) are designed as relays, and in that one winding of the monitoring member, designed as a monitoring relay, is connected to the additional voltage (GU) preferably via a transistor-amplification stage (T) by means of the detachable connection, preferably the plug-in device (A1/A2), and in that one winding of the storing member, designed as a storing relay (H), can be connected to the operating voltage source via a parallel connection of a monitoring-relay normally open contact (1e) and a storing-relay normally open contact (1h).

3. Circuit arrangement according to Claim 2, characterized in that the alarm signal is formed via a parallel connection of a monitoring-relay normally open contact (2e) with a storing-relay normally closed contact (2h) and comprises an interruption of the alarm signal circuit.

4. Circuit arrangement according to Claim 1 or Claim 3, characterized in that an auxiliary member, which is preferably designed as an auxiliary relay (F) is on the one hand connected, preferably by a first winding end, independently of the detachable connection, preferably that of the plug-in device (A1/A2), to the operating voltage source (Gu) and on the other hand can be connected, preferably by a second winding end, via the detachable connection, preferably the plug-in connection (A1/A2), to a terminal of the operating voltage source forming the antipole of the said source, and in that the auxiliary member is energized via the operating voltage source when the plug-in connection is brought together, and in that the operative switching of the storing member (H) is in switch dependence on the energization and actuation of the auxiliary member (F) and in that the emitting of the alarm signal in the non-activated switching state of the monitoring member and in the non-operatively switched state of the storing member additionally takes place when the auxiliary member is energized and actuated.

5. Circuit arrangement according to Claims 3 and 4, characterized in that, of the auxiliary member designed as an auxiliary relay (F), a normally closed contact (2f) is connected in series with the storing-relay normally closed contact (2h).

6. Circuit arrangement according to Claim 2 or 4, characterized in that the relays are realized analogously with the aid of Schmitt triggers (K1, K3, K4) and gate circuits (K2, K5 to K7).

## Revendications

1. Montage pour des dispositifs d'alimentation en courant dans des installations de commutation de télécommunication, notamment dans des installations de commutation téléphonique, comportant des appareils (D1 à Dn) devant être alimentés par des tensions, et des sources de tension (Gu, GU) pour au moins une tension de service (-u, -u′) et pour une tension supplémentaire (U), cette dernière étant nécessaire uniquement pour une partie d'appareil et pouvant être envoyée par l'intermédiaire d'une liaison amovible, associée à la source de tension supplémentaire, notamment par l'intermédiaire du dispositif de connexion à enfichage (A1/A2), et comportant un dispositif de contrôle de tension (B) qui est prévu individuellement pour les appareils ou les groupes d'appareils,
caractérisé par le fait que le dispositif de contrôle de tension (V) comporte un élément de mémoire (H) en plus d'un élément de contrôle (E), et que l'élément de contrôle (E) est activé par la tension supplémentaire qui est délivrée par la source de tension supplémentaire, par l'intermédiaire de la liaison amovible, notamment par l'intermédiaire du dispositif de connexion à enfichage (A1/A2), et que l'élément de mémoire (H) est, d'une part, activé au moyen de la tension de service délivrée par la source de tension de service indépendamment de la liaison amovible, notamment du dispositif de connexion, par l'intermédiaire d'un interrupteur (1e) actionné par l'élément de contrôle activé, et, d'autre part, se maintient, par l'intermédiaire d'un interrupteur particulier (1h) dans l'état activé, et que, lorsque l'élément de mémoire est dans l'état activé, alors que l'élément de contrôle est dans l'état de commutation simultanément non activé, ces deux éléments délivrent un signal d'alarme, qui indique, pour des appareils qui requièrent la tension supplémentaire ou pour leurs groupes considérés, une absence de cette tension supplémentaire, ou un dépassement de limites prédéterminées de tolérances par valeurs supérieures et/ou inférieures.

2. Montage suivant la revendication 1, caractérisé par le fait que l'élément de contrôle (E) et l'élément de mémoire (H) sont réalisés sous la forme de relais, et qu'un enroulement de l'élément de contrôle réalisé en tant que relais de contrôle est relié à la tension supplémentaire (GU) notamment par l'intermédiaire d'un étage d'amplification à transistors (T), au moyen de la liaison amovible, notamment du dispositif de connexion à enfichage (A1/A2), et qu'un enroulement de l'élément de mémoire réalisé sous la forme d'une mémoire (H) peut être relié à la source de tension de service par l'intermédiaire d'un montage parallèle formé d'un contact de travail (1e) du relais de contrôle et d'un contact de travail (1h) du relais de mémoire.

3. Montage suivant la revendication 2, caractérisé par le fait que le signal d'alarme est formé au moyen d'un circuit formé par le montage en parallèle d'un contact de travail (2e) du relais de contrôle et d'un contact de repos (2h) du relais de mémoire et consiste en une interruption du circuit délivrant le signal d'alarme.

4. Montage suivant la revendication 1 ou la revendication 3, caractérisé par le fait qu'un élément auxiliaire, qui est réalisé notamment sous la forme d'un relais auxiliaire (F), d'une part, est relié, notamment par une première extrémité d'enroulement, à la source de tension de service (Gu), indépendamment de la liaison amovible, notamment du dispositif de connexion (A1/A2), et, d'autre part, peut être relié, notamment par une seconde extrémité d'enroulement, à une borne de la source de tension de service, qui forme le pôle opposé de cette source, par l'intermédiaire d'une liaison amovible, notamment du dispositif de connexion (A1/A2), et que l'élément auxiliaire est activé par l'intermédiaire de la source de tension de service lorsque le dispositif de connexion est connecté, et que l'activation de l'élément de mémoire (H) s'effectue en fonction du branchement et de l'actionnement de l'élément auxiliaire (7), et que la délivrance du signal d'alarme s'effectue en supplément lorsque l'élément de contrôle est dans l'état de commutation non activé et que l'élément de mémoire est dans l'état non activé, lorsque l'élément auxiliaire est branché et activé.

5. Montage suivant les revendications 3 et 4, caractérisé par le fait qu'un contact de repos (2f) de l'élément auxiliaire réalisé sous la forme d'un relais auxiliaire (F), est branché en série avec le contact de repos (2h) du relais de mémoire.

6. Montage suivant la revendication 2 ou 4, caractérisé par le fait que les relais sont réalisés d'une manière analogue à l'aide de déclencheurs de Schmitt (K1, K3, K4) et de circuits de portes (K2, K5 et K7).
